# EUROPEAN PATENT SPECIFICATION

(11) **EP 3 008 463 B1**
(45) Date of publication and mention of the grant of the patent: **07.04.2021**
(21) Application number: 13745904.6
(22) Date of filing: 12.06.2013
(51) Int. Cl.: G01N 30/16, G01N 1/10, G01N 30/20, G01N 30/32, G01N 30/24

(54) **FLUSHING A METERING DEVICE SWITCHABLE BETWEEN DIFFERENT FLUIDIC PATHS BY SOLVENT FROM AN ANALYSIS PATH OF A FLUID SEPARATION SYSTEM**
SPÜLUNG EINER ZWISCHEN UNTERSCHIEDLICHEN FLUIDISCHEN PFADEN SCHALTBAREN DOSIER-VORRICHTUNG MIT LÖSUNGSMITTEL AUS EINEM ANALYTISCHEN PFAD EINES FLÜSSIGKEITSTRENNUNGSSYSTEMS
RINSAGE D'UN APPAREIL DE DOSAGE PAR UN SOLVENT PROVENANT D'UN CIRCUIT ANALYTIQUE D'UN SYSTÈME DE SÉPARATION DE FLUIDE, LEDIT APPAREIL DE DOSAGE ETANT COMMUTABLE ENTRE DIFFERENTS CIRCUITS D'ÉCOULEMENT

(43) Date of publication of application: 20.04.2016
(73) Proprietor: Agilent Technologies, Inc., Santa Clara, CA 95051 (US)
(72) Inventor: WETZEL, Matthias, 76337 Waldbronn (DE); EFFELSBERG, Uwe, 76337 Waldbronn (DE); SHOYKHET, Konstantin, 76337 Waldbronn (DE); BERNDT, Manfred, 76337 Waldbronn (DE); THIELSCH,Daniel, 76337 Waldbronn (DE); ORTMANN,Thomas, 76337 Waldbronn (DE)
(74) Representative: Dilg, Haeusler, Schindelmann Patentanwaltsgesellschaft mbH
(86) International application number: PCT/IB2013/054817
(87) International publication number: WO 2014/199198

(56) References cited:
- EP-A1- 1 536 228
- WO-A1-2009/092345
- WO-A1-2010/139359
- US-A1- 2006 045 810
- US-A1- 2013 067 997
- US-B1- 6 382 035

## Description

### BACKGROUND ART

The present invention relates to sample injectors, particularly for fluid separation systems such as a high performance liquid chromatography application.

In high performance liquid chromatography (HPLC, see for instance http://en.wikipedia.org/wiki/HPLC), a liquid has to be provided usually at a very controlled flow rate (e.g. in the range of microliters to milliliters per minute) and at high pressure (typically 20-100 MPa, 200-1000 bar, and beyond up to currently 200 MPa, 2000 bar) at which compressibility of the liquid becomes noticeable. For liquid separation in an HPLC system, a mobile phase comprising a sample fluid with compounds to be separated is driven through a stationary phase (such as a chromatographic column), thus separating different compounds of the sample fluid.

Valves are commonly used in HPLC applications, for instance injection valves for introducing a liquid sample into a high pressure flowing stream of liquid, purge valves for positive displacement pumps, flow path switching valves, etc. Such valves used in HPLC applications are often multi-position rotary valves. Examples of multi-position rotary valves are disclosed in US 4,068,528 A (two-position valves) or US 2003/0098076 A1 (multi-function rotary valves or random-access, dual, three-way, rotary switching valves).

Shear valves, which can be used in multi-way embodiments, are usually formed by a housing and a body defining a stepped cavity in which the rotor or seal is positioned. The housing contains at least two shear seal valve members positioned to be aligned with ports in the rotor (body) to establish communication between the shear seal means. Shear valves are usually provided as rotary valves (such as the aforementioned rotary valves) or translational valves (often also called sliding valves), such as disclosed in EP 0321774 A2.

US 6,382,035, WO 2010/139359, US 2013/067997 and US 2006/045810 disclose sample injectors for use in a fluid separation system, said injector system comprising a switchable valve, a metering device and a sample loop.

In modern sample injectors, many functions need to be supported by a switchable valve. Conventional switchable valves and injector architectures may be inappropriate for such multi-function applications.

### DISCLOSURE

It is an object of the invention to provide a sample injector capable of supporting multiple functions. The object is solved by the independent claims. Further embodiments are shown by the dependent claims.

According to an embodiment of the present invention, a sample injector is provided which is configured to introduce a sample fluid into a mobile phase, wherein the mobile phase is to be driven by a mobile phase drive through a separation unit for separating compounds of the sample fluid in the mobile phase, wherein the sample injector comprises a metering device being operable for intaking a metered amount of the sample fluid into the sample injector, and a fluidic valve being switchable for operating the sample injector selectively in a flushing mode in which the metering device is switched at least temporarily into fluid communication with (or within a mobile phase flow path, i.e. fluidically coupled with) the mobile phase drive so that the metering device is flushed by the mobile phase being delivered by the mobile phase drive, or a separation mode in which the metering device is switched out of (or apart from, i.e. fluidically decoupled from) a fluidic path between the mobile phase drive and the separation unit so that the sample fluid is driven between the mobile phase drive and the separation unit for separating the compounds.

According to another embodiment of the present invention, a fluid separation system for separating compounds of a sample fluid in a mobile phase is provided, wherein the fluid separation system comprises a mobile phase drive, particularly a pumping system, configured to drive the mobile phase through the fluid separation system, a sample injector having the above mentioned features and being configured to introduce the sample fluid into the mobile phase, and a separation unit, particularly a chromatographic column, configured for separating the compounds of the sample fluid in the mobile phase.

According to still another embodiment of the present invention, a method of operating a fluid separation system for separating compounds of a sample fluid in a mobile phase by executing a sequence of operation modes by switching a fluidic valve of a sample injector is provided, wherein the method comprising switching the fluidic valve into a flushing mode in which a metering device of the sample injector is switched at least temporarily (i.e. during the entire flushing mode or only during a temporal or functional part thereof) into fluid communication with a mobile phase drive driving the mobile phase so that the metering device is flushed by the mobile phase being delivered by the mobile phase drive, an intake mode in which the metering device intakes a metered amount of the sample fluid into the sample injector, and a separation mode in which the metering device is switched out of a fluidic path between the mobile phase drive and a separation unit, and the sample fluid is injected into the fluidic path between the mobile phase drive and the separation unit for separating the compounds of the sample fluid in the mobile phase.

According to an exemplary embodiment, a sample injector is provided in which the metering device can be switched selectively into an analysis path (i.e. between mobile phase drive and separation unit) to be flushed by mobile phase transported by the mobile phase drive. In another operation mode, the metering device can be switched to be located outside of the analytical path during the actual analysis or separation of the sample. Both ways are possible within one valve and that mobile phase is delivered into the metering device without disturbing separation path's pressure transient. Furthermore, the provision of separate flush fluid containers for flushing the metering device is dispensable, rendering the sample injector compact and simple in construction. Moreover, the possibility to switch and locate the metering device outside of the high pressure path or analysis path during actual analysis of the fluidic sample allows to maintain the dead volume during sample analysis small (i.e. the mixture of sample fluid and mobile phase does not have to pass the interior volume of the metering device), thereby rendering the separation accurate. Furthermore, using one and the same mobile phase (i.e. the mobile phase provided by the mobile phase drive, usually an appropriate solvent composition) for sample separation in the analysis path and for flushing the metering device suppresses any artifacts and inconsistencies which might occur as a result of using different fluids for flushing and separating. Moreover, the architecture of the sample injector according to an exemplary embodiment allows to perform all switching tasks with a single high-pressure valve and therefore in a compact and efficient way.

In the following, further exemplary embodiments of the sample injector, the fluid separation system and the method will be explained.

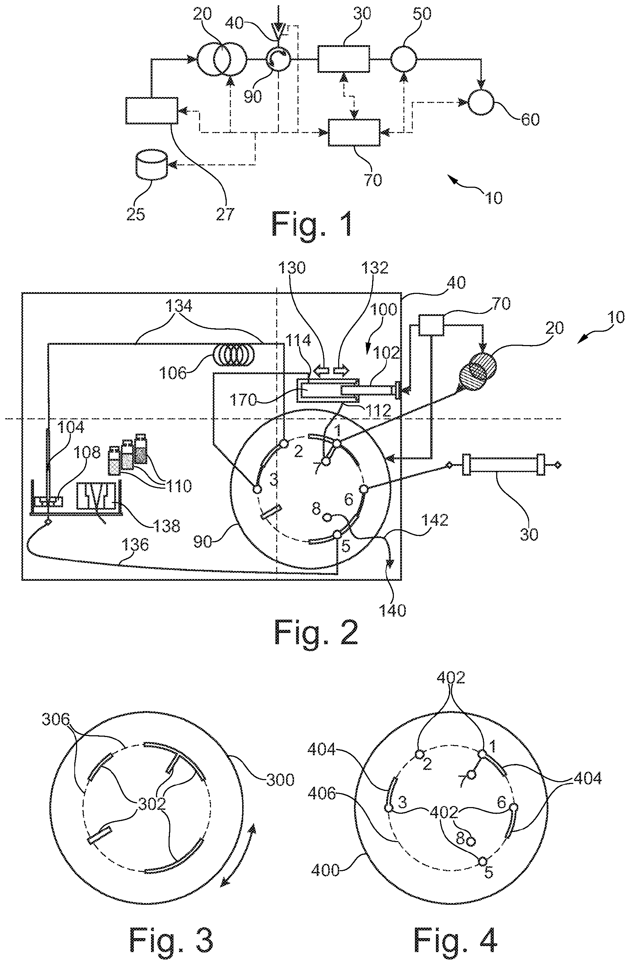

In one embodiment, the flushing mode comprises driving the mobile phase from the mobile phase drive via the fluidic valve and via an inlet interface of the metering device into the metering device and via an outlet interface of the metering device out of the metering device and from there (for instance via a sample loop, an injection needle, a needle seat and connected capillaries) through the fluidic valve towards the separation unit. After flowing out of the outlet interface of the metering device and before flowing through the fluidic valve towards the separation unit, the mobile phase may furthermore flow one more times through the fluidic valve and then through the so-called main path, i.e. a fluidic path formed by sample loop, injection needle, needle seat accommodating the injection needle and optionally a seat capillary if the needle seat is not attached directly or onto the valve. Such an embodiment is shown in Figure 2 to Figure 8. This embodiment has the advantage that a through flow of the mobile phase through the metering device is possible, which makes it possible to perform the metering device flushing in a continuous procedure and hence in a fast way.

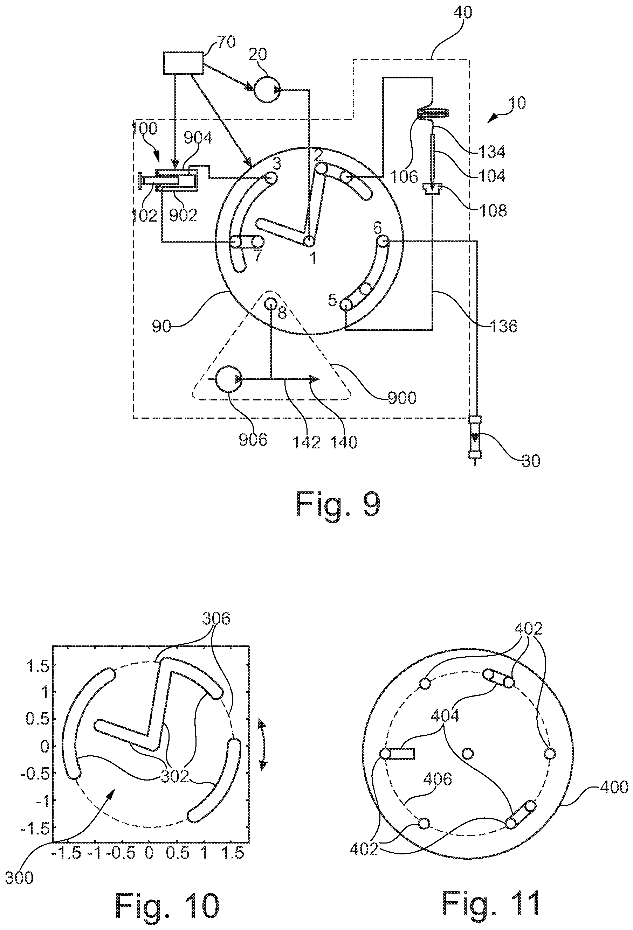

In an alternative embodiment, the flushing mode comprises a filling procedure in which the metering device is switched into fluid communication with the mobile phase drive driving the mobile phase so that the metering device is filled with the mobile phase via an inlet interface of the metering device while an outlet interface of the metering device is blocked (in such a dead-end-approach, it is advantageous that a metering piston moves to let solvent flow into the metering device additionally to that for compressing the metering device's volume). In this embodiment, the flushing mode furthermore comprises a subsequent defilling procedure in which the metering device is switched out of fluid communication with the mobile phase drive and its outlet interface is switched in fluid communication with a waste path so that the mobile phase filled in the metering device during the filling procedure is defilled while the inlet interface of the metering device is blocked. Between the filling procedure and the defilling procedure, a bypass and compression/decompression procedure may be carried out. Such an embodiment is shown in Figure 9 to Figure 15. A corresponding architecture performs the flushing of the metering device in two separate procedures which may be optionally interrupted by another task.

In an embodiment, the metering device is configured to be switched into a high pressure path between the mobile phase drive and the separation unit during at least a part of the flushing mode. In such a high pressure path, the pressure with which the mobile phase is driven may be at least 800 bar, particularly at least 1200 bar. Correspondingly, the metering device may be configured as a high pressure resistant metering device, particularly being configured to be resistant against a pressure of at least about 600 bar, more particularly of at least about 1200 bar.

In an embodiment, the metering device is configured to be switched into a low pressure path in the separation mode. In this low pressure path, the pressure may be smaller than the pressure in the above-mentioned high pressure path. In such a low pressure path, the pressure acting on the metering device may be less than 600 bar, particularly less than 400 bar.

In an embodiment, the fluidic valve is switchable for operating the sample injector selectively in an intake mode in which the metering device intakes a metered amount of the sample fluid into the sample injector. The sample injector may further comprise an injection needle drivable for immersing into the sample fluid, and a sample loop in fluid communication with the injection needle for accommodating the sample fluid upon being intaken by the metering device via the injection needle. The sample injector may further comprise a needle seat configured for sealingly accommodating the injection needle, wherein the injection needle is drivable into a sample container for immersing into the sample fluid and is subsequently drivable into the needle seat. In such an intake mode, it is possible that an injection needle of the sample injector is driven to be dipped or immersed into sample fluid of a sample container. In this operation mode, a piston of the metering device may then be moved so as to suck a defined volume or mass of the sample fluid into a sample loop in a capillary being in fluid connection with the injection needle and the metering device. The injection needle (which may be externally washed at an appropriate time during executing the sequence of procedures) may then be driven back into a needle seat for establishing a sealed connection therewith. After that, the sample fluid can be transported from the sample loop into the analysis path between the mobile phase drive and the separation unit by switching the valve to a mainpass position, i.e. by putting the sample loop and the needle and the seat and the optional seat capillary into the analysis path. Thus, the sample fluid not only flows through the injection needle when sucking the sample fluid from the sample container, but also when injecting the sample fluid accommodated in the sample loop into the analysis path.

In an embodiment, the fluidic valve is switchable for operating the sample injector selectively in a pressure adjustment mode in which the metering device is operated for adjusting a pressure in a fluidic path of the sample injector while the metering device is switched out of the fluidic path between the mobile phase drive and the separation unit. As mentioned above, the metering device may be operated in a higher pressure mode (for instance at a pressure of 1000 bar or more) when being supplied with mobile phase driven by the mobile phase drive, and may be operated in a lower pressure mode (for instance at a pressure of 400 bar or less) for instance when sucking sample fluid from a sample container or when being disconnected from the analysis path during actual analysis or separation of the sample fluid. The transition between a high pressure condition and a low pressure condition may conventionality cause a sudden pressure drop which may damage components of fluidic valve and other fluidic members of the main path (i.e. the fluidic path including metering device, sample loop, injection needle, needle seats, and connected capillaries). In order to reduce or eliminate such a steep pressure step or sudden pressure change, the described pressure adjustment mode involves motion of the piston of the metering device so as to prepare the fluidic path in which the metering device is presently located to the future pressure value.

In an embodiment, the pressure adjustment mode comprises a pre-compression mode in which the metering device is operated for increasing the pressure in the fluidic path of the sample injector to at least reduce a pressure drop when switching in the separation mode. In the pre-compression or compression mode, the piston of the metering device may be moved in a direction (for instance forwardly) so as to pressurize the fluidic path in which the metering device is located before changing from a lower pressure condition into a higher pressure condition. By executing such a compression, it is simultaneously possible to compress potential air bubbles in capillaries and/or the working volume of the metering device to thereby at least partially degas the mobile phase. Such air in the fluidic conduits of the sample separation system may deteriorate the separation performance.

In an embodiment, the pressure adjustment mode comprises a pre-decompression mode in which the metering device is operated for decreasing the pressure in the fluidic path of the sample injector to at least reduce a pressure drop when switching in the intake mode. In the pre-decompression or decompression mode, the piston of the metering device may be moved in a direction (for instance backwardly) so as to depressurize the fluidic path in which the metering device is located before changing from a higher pressure condition into a lower pressure condition.

In an embodiment, the metering device comprises a displaceable piston configured for being moved backwardly for intaking mobile phase and/or sample fluid or for decompressing a fluidic path of the sample injector (for instance for depressurizing after finishing the flushing mode). When moving backwardly, the piston displaces mobile phase into a working space of the metering device or decreases a pressure value in a connected fluidic path.

In an embodiment, the displaceable piston of the metering device is configured to be moved forwardly for decompressing a fluidic path of the sample injector (for instance for pressurizing after finishing intaking sample fluid). When moving forwardly, the piston displaces mobile phase out of a working space of the metering device or increases a pressure value in a connected fluidic path.

In an embodiment, both opposing fluidic interfaces of the metering device are fluidically decoupled from the fluidic environment in the separation mode. More specifically, the metering device can be connected directly between two ports of the fluidic valve in such a manner that the metering device is disconnectable from the rest of the sample injector by fluidically decoupling these two ports from all other ports of the fluidic valve, Hence, the metering device may be connected to two ports of the fluidic valve in such a way that it can be completely fluidically disconnected from the remainder of the sample injector. This allows switching the metering device completely apart from the analysis path during sample separation.

In an embodiment, the mentioned fluidic valve is the only fluidic valve of the sample injector. Therefore, it is possible to omit any further fluidic valve in the sample injector, rendering the sample injector compact and simple in operation and control.

In an embodiment, said fluidic valve (which may be configured as a shear valve) comprises a stator having a plurality of ports and comprises a rotor having a plurality of grooves, wherein selective ones of the ports are bringable in fluid communication to one another via a selective one of the grooves by rotating the rotor relative to the stator. Alternatively, it is also possible to manufacture the fluidic valve from two valve bodies which can be made subject to a translational motion relative to one another to bring ports and grooves in alignment with one another for establishing defined fluidic connections.

In an embodiment which refers to the rotor-stator configuration of the fluidic valve, the grooves comprise a plurality of circumferentially arranged arcuate grooves (wherein all grooves may form part of a common circular trajectory) and at least one groove extending radially inwardly with respect to the circumferentially arranged arcuate grooves (i.e. lying inside of the circle corresponding to the common circular trajectory). The arcuate grooves may form interrupted sections of a virtual circle having a center which corresponds to a rotation axis of the rotor. The one or more radially inwardly extending grooves may be directed to point towards the center of the circle and may optionally extend up to the center.

In an embodiment, the rotor comprises exactly three circumferentially arranged arcuate grooves and exactly two grooves extending radially inwardly. Hence, not more than five grooves are sufficient to fulfill all required switching tasks.

In one embodiment, one of the arcuate grooves may be in direct fluid connection with both grooves extending radially inwardly. The other arcuate grooves may be fluidically decoupled from the grooves extending radially inwardly. Such an embodiment is shown in Figure 10.

In one embodiment, one of the arcuate grooves may be in direct fluid connection with one of the grooves extending radially inwardly. The other arcuate grooves may be fluidically decoupled from the grooves extending radially inwardly. Such an embodiment is shown in Figure 3.

In an embodiment, the ports comprise a plurality of ports positioned along a circular trajectory with at least a part of these ports having an equidistant angular distance between one another. The circular trajectory along which these ports are positioned may correspond to and may be identical to a circular trajectory along which the arcuate grooves are arranged. For instance, five (compare Figure 4) or six (compare Figure 11) such ports may be positioned along the circular trajectory and may have an angular distance of 60° (in case of only five such ports, all neighbored ports may have a distance from one another of 60°, however the angular distance between two of these ports may be 120°).

In an embodiment, the ports comprise at least one port positioned radially inwardly with respect to the ports positioned along the circular trajectory. In one embodiment, two such additional ports are provided, compare Figure 4. In another embodiment, a single additional port may be provided which may be located the center of the circle, compare Figure 11. Taking this measure may reduce the surface area on which the ports are formed. Therefore, a sealing surface may be kept small, rendering the fluidic valve resistant against undesired leakage.

In an embodiment, the fluid separation system comprises a control unit configured for controlling the metering device and the mobile phase drive. Such a control unit may be a processor or the like which is capable of coordinating at least operation of the mobile phase drive and the metering device. This control unit may however also control operation of the fluidic valve, injection needle and, if desired, of other fluidic members of the sample injector or the fluid separation system.

In an embodiment, the control unit is configured for synchronically controlling the metering device and the mobile phase drive so that upon moving a displaceable piston of the metering device (particularly backwardly) in the flushing mode, the mobile phase drive is controlled for delivering additional mobile phase so as to maintain a flow rate constant. Operation of the fluid separation system may require, in certain embodiments or applications, a flow rate which is as constant as possible. Fluctuations of the flow rate may result in a deteriorated separation performance. In order to suppress such undesired effects, the additional flow rate of mobile phase required for flushing the metering device may be compensated by the control unit which may control the mobile phase drive so as to add a corresponding amount of mobile phase material selectively during the flushing. Consequently, the effective flow rate of the mobile phase appears to remain constant even during flushing the metering device.

Embodiments of the present invention might be embodied based on most conventionally available HPLC systems, such as the Agilent 1200 Series Rapid Resolution LC system or the Agilent 1100 HPLC series (both provided by the applicant Agilent Technologies - see www.agilent.com - which shall be incorporated herein by reference).

One embodiment comprises a pumping apparatus as the mobile phase drive having a piston for reciprocation in a pump working chamber to compress liquid in the pump working chamber to a high pressure at which compressibility of the liquid becomes noticeable.

The separation unit preferably comprises a chromatographic column (see for instance http://en.wikipedia.org/wiki/Column chromatography) providing the stationary phase. The column might be a glass or steel tube (for instance with a diameter from 50 µm to 5 mm and a length of 1 cm to 1 m) or a microfluidic column (as disclosed for instance in EP 1577012 or the Agilent 1200 Series HPLC-Chip/MS System provided by the applicant Agilent Technologies, see for instance http://www.chem.agilent.com/Scripts/PDS.asp?IPage=38308). For example, a slurry can be prepared with a powder of the stationary phase and then poured and pressed into the column. The individual components are retained by the stationary phase differently and separate from each other while they are propagating at different speeds through the column with the eluent. At the end of the column they elute one at a time. During the entire chromatography process the eluent might be also collected in a series of fractions. The stationary phase or adsorbent in column chromatography usually is a solid material. The most common stationary phase for column chromatography is silica gel, followed by alumina. Cellulose powder has often been used in the past. Also possible are ion exchange chromatography, reversed-phase chromatography (RP), affinity chromatography or expanded bed adsorption (EBA). The stationary phases are usually finely ground powders or gels and/or are microporous for an increased surface, though in EBA a fluidized bed is used.

The mobile phase (or eluent) can be either a pure solvent or a mixture of different solvents. It can be chosen for instance to minimize the retention of the compounds of interest and/or the amount of mobile phase to run the chromatography. The mobile phase can also been chosen so that the different compounds can be separated effectively. The mobile phase might comprise an organic solvent like for instance methanol or acetonitrile, often diluted with water. For gradient operation water and organic is delivered in separate bottles, from which the gradient pump delivers a programmed blend to the system. Other commonly used solvents may be isopropanol, THF, hexane, ethanol and/or any combination thereof or any combination of these with aforementioned solvents.

The sample fluid might comprise any type of process liquid, natural sample like juice, body fluids like plasma or it may be the result of a reaction like from a fermentation broth.

The pressure in the mobile phase might range from 2-200 MPa (20 to 2000 bar), in particular 10-150 MPa (100 to 1500 bar), and more particular 50-120 MPa (500 to 1200 bar).

The HPLC system may further comprise a detector for detecting separated compounds of the sample fluid, a fractionating unit for outputting separated compounds of the sample fluid, or any combination thereof. Further details of HPLC system are disclosed with respect to the Agilent 1200 Series Rapid Resolution LC system or the Agilent 1100 HPLC series, both provided by the applicant Agilent Technologies, under www.agilent.com which shall be in cooperated herein by reference.

Embodiments of the invention can be partly or entirely embodied or supported by one or more suitable software programs, which can be stored on or otherwise provided by any kind of data carrier, and which might be executed in or by any suitable data processing unit. Software programs or routines can be preferably applied in or by the control unit.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawing(s). Features that are substantially or functionally equal or similar will be referred to by the same reference sign(s).
Figure 1 shows a liquid separation system, in accordance with embodiments of the present invention, for instance used in high performance liquid chromatography (HPLC).
Figure 2 shows a sample injector of a liquid separation system according to an exemplary embodiment.
Figure 3 shows a rotor member of the fluidic valve of the sample injector of Figure 2.
Figure 4 shows a stator member of the fluidic valve of the sample injector of Figure 2.
Figure 5 to Figure 8 show the sample injector of Figure 2 in different operation modes during carrying out a sample separation procedure according to an exemplary embodiment.
Figure 9 shows a sample injector of a liquid separation system according to another exemplary embodiment.
Figure 10 shows a rotor member of the fluidic valve of the sample injector of Figure 9.
Figure 11 shows a stator member of the fluidic valve of the sample injector of Figure 9.
Figure 12 to Figure 15 show the sample injector of Figure 9 in different operation modes during carrying out a liquid separation procedure according to an exemplary embodiment.

The illustration in the drawing is schematically.

Before describing the figures in further detail, some basic considerations of the present inventors will be summarized based on which exemplary embodiments have been developed.

Exemplary embodiments relate to an injection valve design for disengaged metering with an automatic flush position for a sample injector of a fluid separation system. Particularly, a flow-through-needle design with the metering device being located outside of an analytical flow path (i.e. "disengaged") is proposed. Hence, the injection of a fluidic (i.e. liquid and/or gaseous, wherein optionally solid particles may be present in the sample as well) sample is done by putting the so-called "main path" (i.e. sample loop and needle and seat and seat capillary) into the analytical path in between pump and separation column.

In such a design, the following (additional) tasks are advantageous: The metering device shall be re-filled with fresh solvent, and the sample path shall be pre-pressurized.

Occasions in which the metering device shall be re-filled with fresh solvent are:
- after changing the analytical solvent condition the metering device's solvent shall be exchanged accordingly
- after a certain time there may be a formation of portions of air within the metering device due to small leakages or the like
- after maintenance or repair to initially prime the metering device.

In a conventional approach, this is done by using additional components:
- an independent low pressure valve (i.e. to be provided in addition to a high pressure valve)
- capillaries for such a low pressure valve with connections and a certain hydraulic volume
- one or two solvent reservoirs perhaps also with a degassing chamber
- additionally also a manual switch valve for purging/priming the metering device may be necessary.

With regards to pre-pressurizing the sample path, the "main path" shall be elevated to system pressure before injecting into the analytical path (analytical pump-column) which may involve the following requirements, which have to be considered as well in the above-mentioned conventional approach:
- the metering device has to be resistant to high-pressure-condition
- the low pressure valve has to be resistant to high pressure condition
- before each injection, a portion of fresh solvent may be needed to pressurize the sample loop.

However, the mentioned conventional approach has a number of shortcomings:
- amount of components necessary to do the tasks
- the solvent is pre-mixed, therefore somehow fix and in principle different from current mobile phase provided by analytical pump
- purging the metering device to get air removed is done using atmospheric pressure and may be insufficient or time consuming or even special solvents may be necessary.

In order to overcome the above and other shortcomings, an exemplary embodiment allows to only temporarily switch the metering device into the analysis path between the mobile phase drive and the separation unit to thereby flush the metering device with mobile phase delivered and transported by the mobile phase drive. Unique is also the possibility to take solvent from the analytical flow path without creating high pressure fluctuations by moving the metering device while connected to the analytical flow path. The mobile phase drive (such as a pump device) delivering the mobile phase may compensate for the volume increase from moving the metering device.

Such an embodiment has the following advantages over conventional approaches:
- just one valve is needed (the cost of one high-pressure resisting valve is immense)
- capillary connections for an additional further valve can be omitted
- the solvent for the metering device refill can be always taken from the analytical pump and therefore may be always identical to the current solvent composition
- the metering device's solvent may be pressurized during refill so that the capability of solving and removing air is much higher as most of the air is dissolved during pressurizing, which saves time, eliminates the need for priming solvents and ensures reliable operation in terms of precise metering of sample
- the volume within the purging path is very low because no external connections are needed
- system can flush and fill metering device through analytical path
- system may disconnect metering device during analysis
- system has low delay volume because lack of external connections
- system allows compressing the sample loop prior to injection
- metering refill/prime can be done rapidly using the analytical pump and can be done always when column reconditioning/equilibration is on the way.

Referring now in greater detail to the drawings, **Figure 1** depicts a general schematic of a liquid separation system 10. A pump as a mobile phase drive 20 receives a mobile phase from a solvent supply 25, typically via a degasser 27, which degases and thus reduces the amount of dissolved gases in the mobile phase. The mobile phase drive 20 drives the mobile phase through a separation unit 30 (such as a chromatographic column) comprising a stationary phase. A sampling unit or sample injector 40 (compare the detailed description of Figure 2 to Figure 15) can be provided between the mobile phase drive 20 and the separation unit 30 in order to subject or add (often referred to as sample introduction) a sample fluid into the mobile phase. The stationary phase of the separation unit 30 is configured for separating compounds of the sample liquid. A detector 50 is provided for detecting separated compounds of the sample fluid. A fractionating unit 60 can be provided for outputting separated compounds of sample fluid.

While the mobile phase can be comprised of one solvent only, it may also be mixed from plural solvents. Such mixing might be a low pressure mixing and provided upstream of the mobile phase drive 20, so that the mobile phase drive 20 already receives and pumps the mixed solvents as the mobile phase. Alternatively, the mobile phase drive 20 might be comprised of plural individual pumping units, with plural of the pumping units each receiving and pumping a different solvent or mixture, so that the mixing of the mobile phase (as received by the separation unit 30) occurs at high pressure und downstream of the mobile phase drive 20 (or as part thereof). The composition (mixture) of the mobile phase may be kept constant over time, the so called isocratic mode, or varied over time, the so called gradient mode.

A data processing unit or control unit 70, which can be a conventional PC or workstation, might be coupled (as indicated by the dotted arrows) to one or more of the devices in the liquid separation system 10 in order to receive information and/or control operation. For example, the control unit 70 might control operation of the mobile phase drive 20 (for instance setting control parameters) and receive therefrom information regarding the actual working conditions (such as output pressure, flow rate, etc. at an outlet of the pump). The control unit 70 might also control operation of the solvent supply 25 (for instance setting the solvent/s or solvent mixture to be supplied) and/or the degasser 27 (for instance setting control parameters such as vacuum level) and might receive therefrom information regarding the actual working conditions (such as solvent composition supplied over time, flow rate, vacuum level, etc.). The control unit 70 might further control operation of the sample injector 40 (for instance controlling sample injection or synchronization sample injection with operating conditions of the mobile phase drive 20). The separation unit 30 might also be controlled by the control unit 70 (for instance selecting a specific flow path or column, setting operation temperature, etc.), and send - in return - information (for instance operating conditions) to the control unit 70. Accordingly, the detector 50 might be controlled by the control unit 70 (for instance with respect to spectral or wavelength settings, setting time constants, start/stop data acquisition), and send information (for instance about the detected sample compounds) to the control unit 70. The control unit 70 might also control operation of the fractionating unit 60 (for instance in conjunction with data received from the detector 50) and provides data back.

Reference numeral 90 schematically illustrates a switchable fluidic valve which is controllable for selectively enabling or disabling specific fluidic paths within liquid separation system 10. An example of the constitution of such a fluidic valve 90 and its integration in sample injector 40 will be explained in the following in more detail.

**Figure 2** shows the sample injector 40 of the liquid separation system 10 according to an exemplary embodiment.

The sample injector 40 operates within the liquid separation system 10 described above referring to Figure 1. The sample injector 40 is configured to introduce the sample fluid into the mobile phase which is driven by the mobile phase drive 20 through the separation unit 30 for separating compounds of the sample fluid in the mobile phase.

As can be taken from Figure 2, the sample injector 40 comprises a metering device 100 having a piston 102 which can be moved forwardly (compare reference numeral 130) or backwardly (compare reference numeral 132), i.e. which may reciprocate within a working volume 170 of the metering device 100. A liquid may flow into the metering device 100 via an inlet 112 and may flow out of the metering device 100 via an outlet 114, or *vice versa.* The sample injector 40 furthermore has an injection needle 104 which can be moved or driven for immersing into sample fluid which is accommodated within one of sample containers 110. A sample loop 106 is in fluid communication with the injection needle 104 via a loop capillary 134 and serves for accommodating the sample fluid upon being intaken by the metering device 100 via the injection needle 104. The sample injector 40 furthermore comprises a needle seat 108 which is configured for sealingly accommodating the injection needle 104. The injection needle 104 is therefore drivable or movable into the sample container 110 for immersing into the sample fluid, and can be subsequently driven or moved back into the needle seat 108 in order to establish a fluid-tight high-pressure connection there. In an embodiment, the injection needle 104 is a flow-through needle which is configured for injecting the sample fluid from the sample loop 106 into a flow path between the mobile phase drive 20 and the separation unit 30 via the needle seat 108 and a seat capillary 136. Figure 2 furthermore shows a wash port 138 forming part of the sample injector 40. For washing the injection needle 104, the injection needle 104 may be moved within the wash port 138. The control unit 70 particularly controls and coordinates operation of the mobile phase drive 20, the fluidic valve 90 and the metering device 100. One port of the fluidic valve 90 is coupled, via a conduit 142, to a waste 140.

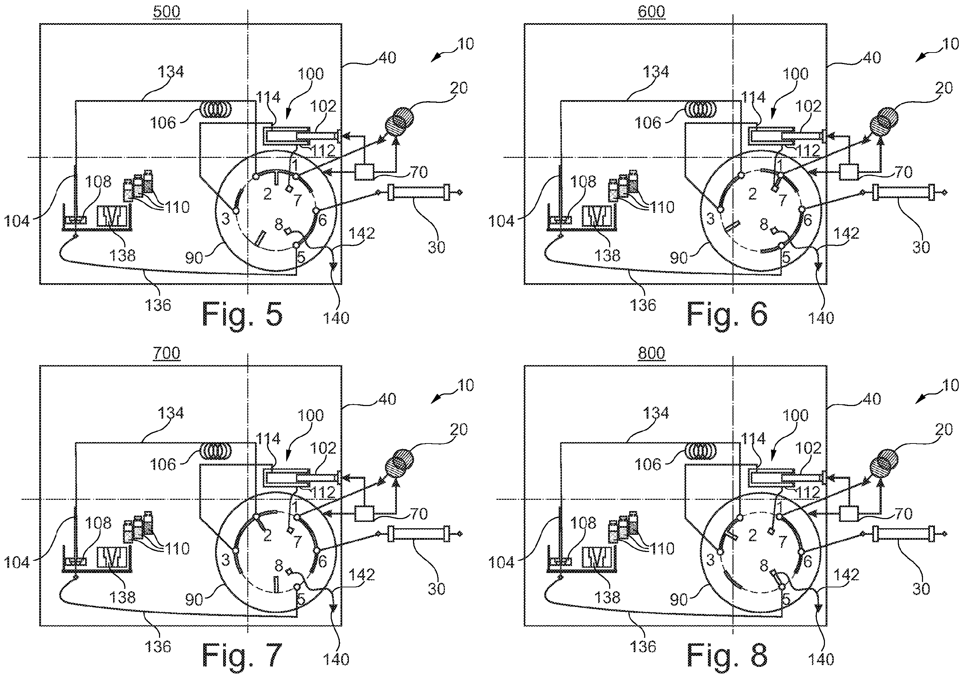

As can be taken from Figure 2, the fluidic valve 90 is the only fluidic valve of the sample injector 40 which can therefore be operated with a single fluidic valve 90 only. This keeps the sample injector 40 compact. Before operation of the sample injector 40 and the liquid separation system 10 will be described in further detail referring to Figure 5 to Figure 8, construction of the fluidic valve 90 will be described in more detail referring to Figure 3 and Figure 4. The fluidic valve 90 comprises a rotor member 300 shown in Figure 3 and a stator member 400 shown in Figure 4.

**Figure 3** shows a plan view of the rotor member 300 of the fluidic valve 90 of the sample injector 40 of Figure 2. The rotor member 300 comprises five grooves 302, wherein three grooves 302 are fluidically isolated from the other grooves 302, and two of the grooves 302 are in permanent fluid communication with one another. More specifically, three of the grooves 302 are circumferentially arranged arcuate grooves which are located along a circular trajectory 306. Two other grooves 302 extend straight and radially inwardly with respect to the circular trajectory 306 and the circumferentially arranged arcuate grooves 302. By extending radially inwardly rather than radially outwardly the sealing area of the fluidic valve 90 can be kept small which allows to manufacture the fluidic valve 90 with reasonable effort and to prevent undesired leakage of mobile phase. The arcuate groove 302 being in direct fluid communication with the radially inwardly extending groove 302 together form a λ-like shape.

**Figure 4** shows a plan view of a stator member 400 of the fluidic valve 90 of the sample injector 40 of Figure 2. The stator member 400 comprises seven ports 402. Each of the ports 402 may be connected to a corresponding one of the fluidic members of the sample separation system 10 of Figure 2, as shown there. Figure 4 shows that the stator member 400 comprises exactly five ports 402 which are positioned along a circular trajectory 406 with an equidistant angular distance of 60° between one another (however two of them have an angular distance of 120°). Two additional ports 402 are positioned radially inwardly with regard to the five ports 402 which are located along the circular trajectory 406. While five of the ports 402 have a dot-like shape, three others of the ports 402 have an arcuate extension 404 located on the circular trajectory 406 as well to extend their fluid coupling capability.

By rotating the rotor member 300 relative to the stator member 400 selective ones of the ports 402 can be brought in fluid communication to one another via a selective one of the grooves 302. By performing a specific rotation task, any of the operation modes shown in Figure 5 to Figure 8 and being described in the following in more detail can be selected.

Again referring to Figure 2, a port of the fluidic valve 90 denoted as #1 is fluidically connected to mobile phase drive 20. A port of the fluidic valve 90 denoted as #2 is fluidically connected to sample loop 106. A port of the fluidic valve 90 denoted as #3 is fluidically connected to the outlet 114 of the metering device 100. A port of the fluidic valve 90 denoted as #5 is fluidically connected to needle seat 108. A port of the fluidic valve 90 denoted as #6 is fluidically connected to separation unit 30. A port of the fluidic valve 90 denoted as #7 is fluidically connected to the inlet 112 of the metering device 100. A port of the fluidic valve 90 denoted as #8 is fluidically connected to the conduit 142 which is connected to the waste 140.

Figure 5 to Figure 8 show the sample injector 40 of Figure 2 in different operation modes during carrying out a sample separation procedure according to an exemplary embodiment.

**Figure 5** shows the sample injector 40 with the fluidic valve 90 being in a switching state which corresponds to a separation mode 500 or inject mode. In this separation mode 500, the metering device 100 is switched out of a fluidic path between the mobile phase drive 20 and the separation unit 30. Hence, the metering device 100 is connected directly between the presently unconnected two ports #3 and #7 and is therefore presently fluidically decoupled from the fluidic environment in the separation mode 500. In the separation mode 500, the sample fluid injected between the mobile phase drive 20 and the separation unit 30 is driven by a mobile phase conveyed by mobile phase drive 20 towards the separation unit 30 for separating the compounds of the sample fluid into its fractions according to the principle of liquid chromatography. In the separation mode 500, the metering device 100 is switched into a low pressure path. In contrast to this, the analysis path between the mobile phase drive 20 and the separation unit 30 is at a high pressure of for instance 1000 bar.

**Figure 6** shows the sample injector 40 with the fluidic valve 90 being in a switching state which corresponds to a flushing mode 600. The present operation mode may also be denoted as "inject and flush metering device". By operating the fluidic valve 90 under control of the control unit 70, the metering device 100 is now switched into fluid communication with the mobile phase drive 20 so that the metering device 100 is flushed by the mobile phase being delivered and driven by the mobile phase drive 20 through the metering device 100. As a result of the switching of the fluidic valve 90 under control of the control unit 70 into the valve position shown in Figure 6, the metering device 100 is now within the high pressure analysis path between the mobile phase drive 20 and the separation unit 30 and therefore experiences a pressure of for instance 1000 bar. It may be desirable that the flow rate of the mobile phase flowing along the analysis path remains constant over time with a high position. However, in view of the flushing of the metering device 100 with the mobile phase, the control unit 70 controls the metering device 100 and the mobile phase drive 20 so that upon moving the displaceable piston 102 of the metering device 100 backwardly in the flushing mode, the mobile phase drive 20 delivers additional mobile phase so as to maintain a flow rate constant. While drawing mobile phase with the metering device 100, the flow take-away can be compensated by the analytic mobile phase drive 20 increasing its flow rate accordingly. Hence, the flushing of the metering device 100 becomes not visible to the remaining components of the liquid separation system 10. As an alternative to a coordinated control of the mobile phase drive 20 and the metering device 100 by the control unit 70, a direct communication between the metering device 100 and the mobile phase drive 20 can be implemented so as to maintain the flow rate constant regardless of the flushing of the metering device 100 with the mobile phase delivered by the mobile phase drive 20. During this flushing at a high pressure, the metering device 100 is also degased automatically. In the flushing mode 600 shown in Figure 6, the mobile phase is driven from the mobile phase drive 20 via the fluidic valve 90 and via the inlet interface 112 into the metering device 100 and via the outlet interface 114 out of the metering device 100 and from there through the fluidic valve 90, the sample loop 106, the injection needle 104, the needle seat 108, and again through the fluidic valve 90 towards the separation unit 30.

**Figure 7** shows the sample injector 40 with the fluidic valve 90 being in a switching state which corresponds to a decompression mode 700 (which may also be denoted as a bypass and decompress mode). As can be taken from Figure 7, after a further switch of the fluidic valve 90, the piston 102 of the metering device 100 is now moved backwardly so as to reduce the pressure in the connected capillaries. For example, the pressure reduction may be from 1000 bar to 400 bar to reduce an undesired pressure drop which may occur during a subsequent further switching operation of the fluidic valve 90. During the decompression, the analytical path between the mobile phase drive 20, the fluidic valve 90 and the separation unit 30 is still run at a high pressure of for instance 1000 bar in a bypass mode.

**Figure 8** shows the sample injector 40 with the fluidic valve 90 being in a switching state which corresponds to an intake mode 800, which may also be denoted as a bypass and draw sample mode. In this intake mode 800, the fluidic valve 90 is switched for operating the sample injector 40 so that the metering device 100 may intake a metered amount of the sample fluid into the sample injector 40. For this purpose, the injection needle 104 is driven into one of the sample containers 110, and the metering device 100 is operated so as to suck sample fluid into the sample loop 106 (not shown). Then, the injection needle 104 is driven back into the needle seat 108.

Although not shown in the figures, the switching valve 90 is subsequently switched back into the position shown in Figure 7 in order to perform a compression mode (which may also be denoted as a bypass and compress mode). Now, the piston 102 of the metering device 100 is moved forwardly in order to increase the pressure in the main path, thereby preparing the metering device 100 and the main path for a subsequent high-pressure operation and preventing an undesired pressure shock.

Thereafter, the switching valve 90 is operated again to bring back the liquid separation system 10 in the configuration shown in Figure 5. A new injection may now take place with the sample metered into the sample loop 106 in the operation mode shown in Figure 8.

The procedure described referring to Figure 5 to Figure 8 is summarized in the following Table 1:

**Table 1**

| Step | Valve position | Analytical Flow Path | Sampler Connections | Comment |
|---|---|---|---|---|
| 1 | Inj ect | Pump →Sampler "main path" →Separation Column | Metering Device Blocked at all ends | |
| 2. | Inj ect and Flush Metering Device | Pump →Metering Device → Sampler "main path" → Separation Column | Metering Device is plugged into the analytical flow path between pump and loop. | Position is used if necessary (solvent change, priming and/or extra-volume for pre-compression needed) |
| 3. | Bypass and Decompress | Pump → Separation Column | Bloc → Metering Device → "main path" → Bloc | Depressurize the loop and the metering device. |
| 4. | Bypass and Draw sample | Pump → Separation Column | Bloc → Metering Device → "main path" → Waste connection | |
| 5. (=3.) | Bypass and Compress | see above | see above | Pressurize the loop and the metering device |
| 6.(=1.) | Inj ect | see above | see above | |

**Figure 9** shows a sample injector 40 of liquid separation system 10 according to another exemplary embodiment.

The connections of the various components of the liquid separation system 10 of Figure 9 to the various ports of the fluidic valve 90 are denoted with the same numbers as in Figure 2. Also, corresponding fluidic members are denoted with the same reference numerals. However, an additional flush pump 906 within a waste path 900 is provided which can be used for flushing the metering device 100. An inlet of the metering device 100 of Figure 9 is denoted with reference numeral 902, whereas an outlet thereof is denoted with reference numeral 904.

**Figure 10** shows the rotor member 300 of the fluidic valve 90 of the sample injector 40 of Figure 9. The rotor member 300 comprises five grooves 302, wherein two grooves 302 are fluidically isolated from the other grooves 302, and three of the grooves 302 are in permanent fluid communication with one another. More specifically, three of the grooves 302 are circumferentially arranged arcuate grooves. Two other grooves 302 extend straight and radially inwardly with respect to the circumferentially arranged arcuate grooves 302. By extending radially inwardly rather than radially outwardly the sealing area of the fluidic valve 90 can be kept small which allows to manufacture the fluidic valve 90 with reasonable effort and to prevent undesired leakage of mobile phase. The arcuate groove 302 being in direct fluid communication with the radially inwardly extending grooves 302 together form an S-like shape.

**Figure 11** shows a stator member 400 of the fluidic valve 90 of the sample injector 40 of Figure 9. The stator member 400 comprises seven ports 402. Each of the ports 402 may be connected to a corresponding one of the fluidic members of the liquid separation system 10 of Figure 9, as shown there. Figure 11 shows that the stator member 400 comprises exactly six ports 402 which are positioned along circular trajectory 406 with an equidistant angular distance of 60° between one another. One additional port 402 is positioned in a center of the circle on which the other six ports 402 are located. While four of the ports 402 have a dot-like shape, three others of the ports 402 have a straight (or arcuate) extension 404 to extend their fluid coupling capability.

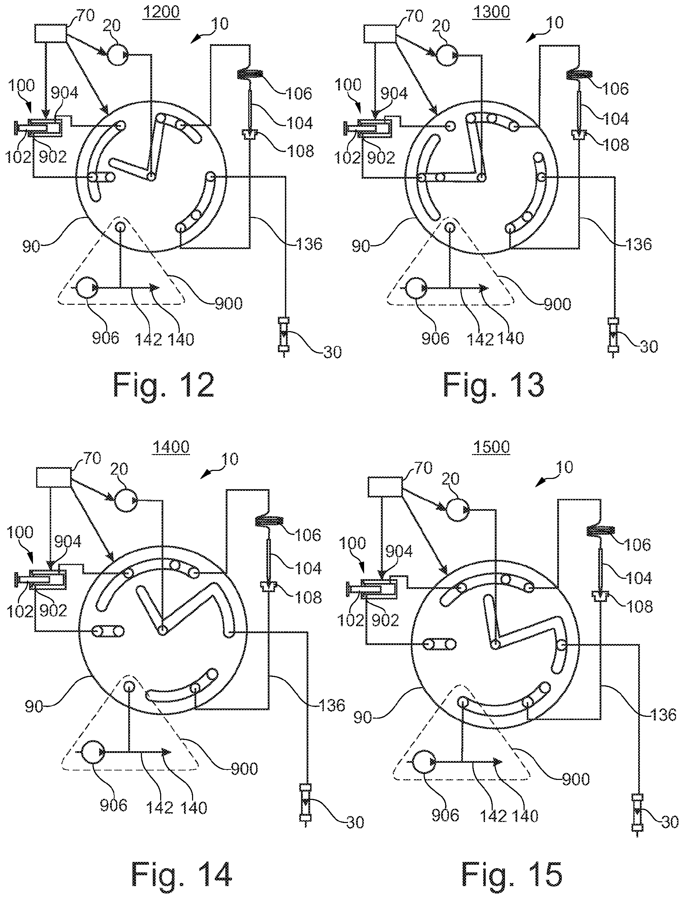

By rotating the rotor member 300 relative to the stator member 400 selective ones of the ports 402 can be brought in fluid communication to one another via a selective one of the grooves 302. By performing a specific rotation task, any of the operation modes shown in Figure 12 to Figure 15 and being described in the following in more detail can be selected.

Figure 12 to Figure 15 show the sample injector 40 of Figure 9 in different operation modes during carrying out a sample separation procedure according to an exemplary embodiment.

**Figure 12** shows the sample injector 40 with the fluidic valve 90 being in a switching state which corresponds to a separation mode 1200 or inject mode. In this separation mode 1200, the metering device 100 is switched out of a fluidic path between the mobile phase drive 20 and the separation unit 30. Hence, the metering device 100 is connected directly between the presently unconnected two ports #3 and #7 and is therefore presently fluidically decoupled from the fluidic environment in the separation mode 1200. In the separation mode 1200, sample fluid which has previously been injected between the mobile phase drive 20 and the separation unit 30 is driven by mobile phase conveyed by mobile phase drive 20 towards the separation unit 30 for separating the compounds of the sample fluid into its fractions. In the separation mode 1200, the metering device 100 is at a low pressure. In contrast to this, the analysis path between the mobile phase drive 20 and the separation unit 30 is at a high pressure of for instance 1000 bar.

**Figure 13** shows the sample injector 40 with the fluidic valve 90 being in a switching state which corresponds to a first part of a flushing mode called filling mode 1300 or "inject and fill". By operating the fluidic valve 90 under control of the control unit 70, the metering device 100 is now switched into fluid communication with the mobile phase drive 20 so that the metering device 100 is filled by the mobile phase being delivered and driven by the mobile phase drive 20 to the metering device 100. As a result of the switching of the fluidic valve 90 under control of the control unit 70 into the valve position shown in Figure 13, the metering device 100 is now in fluid communication with the high pressure analysis path between the mobile phase drive 20 and the separation unit 30 and therefore experiences a pressure of for instance 1000 bar. Thus, Figure 13 shows a filling procedure in which the metering device 100 is switched into fluid communication with the mobile phase drive 20 driving the mobile phase so that the metering device 100 is filled with the mobile phase via its inlet interface 902 while its outlet interface 904 is blocked. In this operation mode, the mobile phase drive 20 also pumps mobile phase through the main path and the separation unit 30.

**Figure 14** shows the sample injector 40 with the fluidic valve 90 being in a switching state which corresponds to a decompression mode 1400 (which may also be denoted as a bypass and decompress mode). The piston 102 of the metering device 100 is moved backwardly so as to reduce the pressure in the connected main path. For example, the pressure reduction may be from 1000 bar to 400 bar to reduce an undesired pressure drop which may occur during a subsequent further switching operation of the fluidic valve 90. During this decompression, the analytical path between the mobile phase drive 20, the fluidic valve 90 and the separation unit 30 is still run at a high pressure of for instance 1000 bar.

**Figure 15** shows the sample injector 40 with the fluidic valve 90 being in a switching state which corresponds to a defilling mode 1500, which may also be denoted as a bypass and metering defill/draw sample mode. During the shown defilling procedure, the metering device 100 is switched out of fluid communication with the mobile phase drive 20 (i.e. the metering device 100 is now fluidically isolated from the mobile phase drive 20). The inlet interface 902 of the metering device 100 is now blocked. The outlet interface 904 of the metering device 100 is switched in fluid communication with waste path 900 via the main path so that the mobile phase filled in the metering device 100 during the filling procedure (compare Figure 13) is defilled. Intaking fresh sample fluid may also be performed in the described operation mode or switching position of the fluidic valve 90 of Figure 15, as described above.

Although not shown in the figures, the switching valve 90 may be subsequently switched back into the position shown in Figure 14 in order to perform a compression mode (which may also be denoted as a bypass and compress mode). Now, the piston 102 of the metering device 100 is moved in order to increase the pressure in the connected main path, thereby preparing the metering device 100 and connected main path for a subsequent high-pressure operation and preventing an undesired pressure shock.

Thereafter, the switching valve 90 may be operated again to bring back the liquid separation system 10 in the configuration shown in Figure 12. A new injection may now take place with the sample metered into the sample loop 106 in the operation mode shown in Figure 15.

The procedure described referring to Figure 12 to Figure 15 is summarized in the following Table 2:

**Table 2**

| Step | Valve position | Analytical Flow Path | Sampler Connections | Comment |
|---|---|---|---|---|
| 1. | 1: Inject | Pump→Sampler "main path" → Separation Column | Metering Device Blocked at all ends | |
| 2. | 2: Inject-And-Fill While drawing w/ metering device the flow take-away is compensated by the analytical pump increasing solvent delivery. | Pump →Sampler "main path" → Separation Column | Metering Device connected to analytical flow path w/ a dead end connection. | If necessary (solvent change and/or extra-volume for pre-compression needed) |
| 3. | 3: Bypass and (De-)compress | Pump → Separation Column | Bloc → Metering Device → "main path" → Bloc | Depressurize the loop and the metering device |
| 4. | 4: Bypass and Metering Defill / Draw sample | Pump → Separation Column | Bloc → Metering Device → "main path" → Waste connection | |
| 5. (=3.) | 3: Bypass and Compress | s.a | s.a | Pressurize the loop and the metering device |
| 6. (=1.) | 1: Inject | s.a. | s.a | |

Refilling the metering device 100 with solvent from the analytical flow path may be done repetitively applying the procedures 1, 2 (draw maximum volume) 3, 4 (eject maximum volume).

It should be noted that the term "comprising" does not exclude other elements or features and the "a" or "an" does not exclude a plurality. Also elements described in association with different embodiments may be combined. It should also be noted that reference signs in the claims shall not be construed as limiting the scope of the claims.

## Claims

1. A sample injector (40) configured to introduce a sample fluid into a mobile phase, wherein the mobile phase is to be driven by a mobile phase drive (20) through a separation unit (30) for separating compounds of the sample fluid in the mobile phase, the sample injector (40) comprising:
at least a portion of an analysis path between the mobile phase drive (20) and the separation unit (30), said portion of an analysis path being suitable for transporting fluids at high pressure;
a metering device (100) being operable for intaking a metered amount of the sample fluid into the sample injector (40);
an injection needle (104) drivable for immersing into the sample fluid; and
a sample loop (106) in fluid communication with the injection needle (104) for accommodating the sample fluid upon being intaken by the metering device (100) via the injection needle (104);
a fluidic valve (90) being switchable for operating the sample injector (40) selectively in:
a flushing mode (600; 1300, 1500) in which the metering device (100) is switched at least temporarily to be within said portion of the analysis path so that the metering device (100) is at least temporarily in fluid communication with the mobile phase drive (20) and so that the metering device (100) is flushed by the mobile phase being delivered by the mobile phase drive (20); or
a separation mode (500; 1200) in which the metering device (100) is switched out of said portion of the analysis path, so that the sample fluid is driven between the mobile phase drive (20) and the separation unit (30) for separating the compounds.

2. The sample injector (40) of claim 1, configured so that the metering device (100) is switched into a low pressure path in the separation mode (500; 1200), the pressure in the low pressure path being lower than the pressure in the analysis path.

3. The sample injector (40) of any of claims 1 or 2, wherein the fluidic valve (90) is switchable for operating the sample injector (40) selectively in an intake mode (800; 1500) in which the metering device (100) intakes a metered amount of the sample fluid into the sample injector (40).

4. The sample injector (40) of any of claims 1 to 3, wherein the fluidic valve (90) is switchable for operating the sample injector (40) selectively in a pressure adjustment mode (700; 1400) in which the metering device (100) is operated for adjusting a pressure in a fluidic path of the sample injector (40) while the metering device (100) is switched out of the fluidic path between the mobile phase drive (20) and the separation unit (30).

5. The sample injector (40) of claim 4, wherein the pressure adjustment mode (700; 1400) is a compression mode in which the metering device (100) is operated for increasing the pressure in the fluidic path of the sample injector (40) to at least reduce a pressure drop when switching subsequently into the separation mode (500; 1200).

6. The sample injector (40) of claims 3 and 4, wherein the pressure adjustment mode (700; 1400) is a decompression mode in which the metering device (100) is operated for decreasing the pressure in the fluidic path of the sample injector (40) to at least reduce a pressure drop when switching subsequently in the intake mode (800; 1500).

7. The sample injector (40) of any of claims 1 to 6, when the metering device (100) comprises a displaceable piston (102) configured for being moved backwardly for intaking mobile phase and/or sample fluid or for decompressing a fluidic path of the sample injector (40).

8. The sample injector (40) of any of claims 1 to 7, wherein both opposing fluidic interfaces (#3, #7) of the metering device (100) are fluidically decoupled from the fluidic environment in the separation mode (500; 1200).

9. The sample injector (40) of any of claims 1 to 8, wherein the metering device (100) is connected directly between two ports (402, #3, #7) of the fluidic valve (90) so that the metering device (100) is disconnectable from the rest of the sample injector (40) by fluidically decoupling these two ports (402, #3, #7) from all other ports (402) of the fluidic valve (90).

10. The sample injector (40) of any of claims 1 to 9, wherein the fluidic valve (90) comprises a stator (400) having a plurality of ports (402) and comprises a rotor (300) having a plurality of grooves (302), wherein selective ones of the ports (402) are bringable in fluid communication to one another via a selective one of the grooves (302) by rotating the rotor (300) relative to the stator (400).

11. The sample injector (40) of claim 10, wherein the grooves (302) comprise a plurality of circumferentially arranged arcuate grooves (302) and at least one groove (302) extending radially inwardly with respect to the circumferentially arranged arcuate grooves (302).

12. The sample injector (40) of claim 1, further comprising a needle seat (108) configured for sealingly accommodating the injection needle (104), wherein the injection needle (104) is drivable into a sample container (110) for immersing into the sample fluid and is subsequently drivable into the needle seat (108).

13. A fluid separation system (10) for separating compounds of a sample fluid in a mobile phase, the fluid separation system (10) comprising:
a mobile phase drive (20), particularly a pumping system, configured to drive the mobile phase through the fluid separation system (10);
a sample injector (40) of any of claims 1 to 12 configured to introduce the sample fluid into the mobile phase; and
a separation unit (30), particularly a chromatographic column, configured for separating the compounds of the sample fluid in the mobile phase.

14. A method of operating a fluid separation system (10) according to claim 13 for separating compounds of a sample fluid in a mobile phase by executing a sequence of operation modes by switching a fluidic valve (90) of the sample injector (40) according to any of one of claims 1 to 12, the method comprising switching the fluidic valve (90) into:
a flushing mode (600; 1300, 1500) in which a metering device (100) of the sample injector (40) Is switched at least temporarily into fluid communication with a mobile phase drive (20) driving the mobile phase so that the metering device (100) is flushed by the mobile phase being delivered by the mobile phase drive (20);
an intake mode (800; 1500) in which the metering device (100) intakes a metered amount of the sample fluid into the sample injector (40); and
a separation mode (500; 1200) in which the metering device (100) is switched out of a fluidic path between the mobile phase drive (20) and a separation unit (30), and the sample fluid is injected into the fluidic path between the mobile phase drive (20) and the separation unit (30) for separating the compounds of the sample fluid in the mobile phase.

## Patentansprüche

1. Ein Probeninjektor (40), welcher zum Einführen eines Probenfluids in eine mobile Phase konfiguriert ist, wobei die mobile Phase mittels eines mobile Phase Antriebs (20) durch eine Trenneinheit (30) anzutreiben ist, zum Trennen von Bestandteilen des Probenfluids der mobilen Phase, wobei der Probeninjektor (40) aufweist:
zumindest einen Abschnitt eines Analysepfads zwischen dem mobile Phase Antrieb (20) und der Trenneinheit (30), wobei der Abschnitt des Analysepfads zum Transportieren von Fluiden bei einem hohen Druck geeignet ist;
eine Messvorrichtung (100), welche betriebsfähig ist zum Einlassen einer gemessenen Menge des Probenfluids in den Probeninjektor (40);
eine Injektionsnadel (104), welche zum Eintauchen in das Probenfluid antreibbar ist; und
eine Probenschleife (106) in Fluidverbindung mit der Injektionsnadel (104) zum Aufnehmen des Probenfluids auf ein Einlassen mittels der Messvorrichtung (100) via die Injektionsnadel (104) hin;
ein fluidisches Ventil (90), welches zum Betreiben des Probeninjektors (40) selektiv schaltbar ist in:
einen Spülmodus (600; 1300, 1500), in welchem die Messvorrichtung (100) derartig geschaltet ist, dass sie zumindest zeitweise in dem Abschnitt des Analysepfads ist, so dass die Messvorrichtung (100) zumindest zeitweise in Fluidverbindung mit dem mobile Phase Antrieb (20) ist, und so dass die Messvorrichtung (100) mittels der mobilen Phase gespült wird, welche mittels des mobile Phase Antriebs (20) zugeführt wird; oder
einen Trennmodus (500; 1200), in welchem die Messvorrichtung (100) aus dem Abschnitt des Analysepfads geschaltet ist, so dass das Probenfluid zwischen dem mobile Phase Antrieb (20) und der Trenneinheit (30) zum Trennen der Bestandteile angetrieben wird.

2. Der Probeninjektor (40) gemäß Anspruch 1, welcher so konfiguriert ist, dass die Messvorrichtung (100) in dem Trennmodus (500; 1200) in einen Niederdruckpfad geschaltet ist, wobei der Druck in dem Niederdruckpfad geringer als der Druck in dem Analysepfad ist.

3. Der Probeninjektor (40) gemäß irgendeinem der Ansprüche 1 oder 2, wobei das fluidische Ventil (90) schaltbar ist zum Betreiben des Probeninjektors (40) selektiv in einem Einlassmodus (800; 1500), in welchem die Messvorrichtung (100) eine gemessene Menge des Probenfluids in den Probeninjektor (40) einlässt.

4. Der Probeninjektor (40) gemäß irgendeinem der Ansprüche 1 bis 3, wobei das fluidische Ventil (90) schaltbar ist zum Betreiben des Probeninjektors (40) selektiv in einem Druckeinstellungsmodus (700; 1400), in welchem die Messvorrichtung (100) zum Einstellen eines Drucks in einem fluidischen Pfad des Probeninjektors (40) betrieben wird, während die Messvorrichtung (100) aus dem fluidischen Pfad zwischen dem mobile Phase Antrieb (20) und der Trenneinheit (30) geschaltet ist.

5. Der Probeninjektor (40) gemäß Anspruch 4, wobei der Druckeinstellungsmodus (700; 1400) ein Kompressionsmodus ist, in welchem die Messvorrichtung (100) zum Erhöhen des Drucks in dem fluidischen Pfad des Probeninjektors (40) betrieben wird, um einen Druckabfall beim nachfolgenden Schalten in den Trennmodus (500; 1200) zumindest zu reduzieren.

6. Der Probeninjektor (40) gemäß den Ansprüchen 3 und 4, wobei der Druckeinstellungsmodus (700; 1400) ein Dekompressionsmodus ist, in welchem die Messvorrichtung (100) zum Verringern des Drucks in dem fluidischen Pfad des Probeninjektors (40) betrieben wird, um einen Druckabfall beim nachfolgenden Schalten in den Einlassmodus (800; 1500) zumindest zu reduzieren.

7. Der Probeninjektor (40) gemäß irgendeinem der Ansprüche 1 bis 6, wobei die Messvorrichtung (100) einen Verdrängungskolben (102) aufweist, welcher konfiguriert ist, nach hinten bewegt zu werden, zum Einlassen der mobilen Phase und/oder des Probenfluids oder zum Dekomprimieren eines fluidischen Pfads des Probeninjektors (40).

8. Der Probeninjektor (40) gemäß irgendeinem der Ansprüche 1 bis 7, wobei beide gegenüberliegenden fluidischen Schnittstellen (#3, #7) der Messvorrichtung (100) von der fluidischen Umgebung in dem Trennmodus (500; 1200) fluidisch entkoppelt sind.

9. Der Probeninjektor (40) gemäß irgendeinem der Ansprüche 1 bis 8, wobei die Messvorrichtung (100) direkt zwischen zwei Anschlüsse (402, #3, #7) des fluidischen Ventils (90) geschaltet ist, so dass die Messvorrichtung (100) von dem Rest des Probeninjektors (40) trennbar ist, mittels fluidischen Entkoppelns dieser zwei Anschlüsse (402, #3, #7) von allen anderen Anschlüssen (402) des fluidischen Ventils (90).

10. Der Probeninjektor (40) gemäß irgendeinem der Ansprüche 1 bis 9, wobei das fluidische Ventil (90) einen Stator (400) aufweist, welcher eine Mehrzahl von Anschlüssen (402) hat, und einen Rotor (300) aufweist, welcher eine Mehrzahl von Nuten (302) hat, wobei Ausgewählte der Anschlüsse (402) via eine Ausgewählte der Nuten (302) miteinander in Fluidverbindung bringbar sind, mittels Rotierens des Rotors (300) relativ zu dem Stator (400).

11. Der Probeninjektor (40) gemäß Anspruch 10, wobei die Nuten (302) eine Mehrzahl von umfänglich angeordneten bogenförmigen Nuten (302) und zumindest eine Nut (302) aufweisen, welche sich in Bezug auf die umfänglich angeordneten bogenförmigen Nuten (302) radial nach innen erstreckt.

12. Der Probeninjektor (40) gemäß Anspruch 1, ferner aufweisend einen Nadelsitz (108), welcher zum abdichtenden Aufnehmen der Injektionsnadel (104) konfiguriert ist, wobei die Injektionsnadel (104) in einen Probenbehälter (110) antreibbar ist, zum Eintauchen in das Probenfluid, und nachfolgend in den Nadelsitz (108) antreibbar ist.

13. Ein Fluidtrennsystem (10) zum Trennen von Bestandteilen eines Probenfluids in einer mobilen Phase, wobei das Fluidtrennsystem (10) aufweist:
einen mobile Phase Antrieb (20), insbesondere ein Pumpsystem, welches konfiguriert ist zum Antreiben der mobilen Phase durch das Fluidtrennsystem (10);
einen Probeninjektor (40) gemäß irgendeinem der Ansprüche 1 bis 12, welcher konfiguriert ist zum Einführen des Probenfluids in die mobile Phase; und
eine Trenneinheit (30), insbesondere eine chromatographische Säule, welche konfiguriert ist zum Trennen der Bestandteile des Probenfluids in der mobilen Phase.

14. Ein Verfahren zum Betreiben eines Fluidtrennsystems (10) gemäß Anspruch 13 zum Trennen von Bestandteilen eines Probenfluids in einer mobilen Phase mittels Ausführens einer Sequenz von Betriebsmodi mittels Schaltens eines fluidischen Ventils (90) des Probeninjektors (40) gemäß irgendeinem der Ansprüche 1 bis 12,
wobei das Verfahren aufweist
Schalten des fluidischen Ventils (90) in:
einen Spülmodus (600; 1300, 1500), in welchem eine Messvorrichtung (100) des Probeninjektors (40) zumindest zeitweise in Fluidverbindung mit einem mobile Phase Antrieb (20) geschaltet wird, welcher die mobile Phase antreibt, so dass die Messvorrichtung (100) mittels der mobilen Phase gespült wird, welche mittels des mobile Phase Antriebs (20) zugeführt wird;
einen Einlassmodus (800; 1500), in welchem die Messvorrichtung (100) eine gemessene Menge des Probenfluids in den Probeninjektor (40) einlässt; und
einen Trennmodus (500; 1200), in welchem die Messvorrichtung (100) aus einem fluidischen Pfad zwischen dem mobile Phase Antrieb (20) und einer Trenneinheit (30) geschaltet wird, und das Probenfluid in den fluidischen Pfad zwischen dem mobile Phase Antrieb (20) und der Trenneinheit (30) injiziert wird, zum Trennen der Bestandteile des Probenfluids in der mobilen Phase.

## Revendications

1. Injecteur d'échantillon (40) configuré pour introduire un fluide d'échantillon dans une phase mobile, dans lequel la phase mobile doit être entraînée par un entraînement de phase mobile (20) à travers une unité de séparation (30) pour séparer des composés du fluide d'échantillon dans la phase mobile, l'injecteur d'échantillon (40) comprenant :
au moins une portion d'un trajet d'analyse entre l'entraînement de phase mobile (20) et l'unité de séparation (30), ladite portion d'un trajet d'analyse étant appropriée pour transporter des fluides à haute pression ;
un dispositif de mesure (100) servant à faire entrer une quantité mesurée du fluide d'échantillon dans l'injecteur d'échantillon (40) ;
une aiguille d'injection (104) pouvant être entraînée pour être immergée dans le fluide d'échantillon ; et
une boucle pour échantillon (106) en communication fluidique avec l'aiguille d'injection (104) pour loger le fluide d'échantillon lorsqu'il est prélevé par le dispositif de mesure (100) via l'aiguille d'injection (104) ;
une vanne fluidique (90) pouvant être commutée pour faire fonctionner l'injecteur d'échantillon (40) sélectivement dans :
un mode rinçage (600 ; 1300, 1500) dans lequel le dispositif de mesure (100) est commuté au moins temporairement pour être dans ladite portion du trajet d'analyse de façon que le dispositif de mesure (100) soit au moins temporairement en communication fluidique avec l'entraînement de phase mobile (20) et de façon que le dispositif de mesure (100) soit rincé par la phase mobile délivrée par l'entraînement de phase mobile (20) ; ou
un mode séparation (500 ; 1200) dans lequel le dispositif de mesure (100) est commuté hors de ladite portion du trajet d'analyse, de façon que le fluide d'échantillon soit entraîné entre l'entraînement de phase mobile (20) et l'unité de séparation (30) pour séparer les composés.

2. Injecteur d'échantillon (40) selon la revendication 1, configuré pour que le dispositif de mesure (100) soit commuté dans un trajet basse pression dans le mode séparation (500 ; 1200), la pression dans le trajet basse pression étant inférieure à la pression dans le trajet d'analyse.

3. Injecteur d'échantillon (40) selon l'une quelconque des revendications 1 ou 2, dans lequel la vanne fluidique (90) peut être commutée pour faire fonctionner l'injecteur d'échantillon (40) sélectivement dans un mode admission (800 ; 1500) dans lequel le dispositif de mesure (100) fait entrer une quantité mesurée du fluide d'échantillon dans l'injecteur d'échantillon (40).

4. Injecteur d'échantillon (40) selon l'une quelconque des revendications 1 à 3, dans lequel la vanne fluidique (90) peut être commutée pour faire fonctionner l'injecteur d'échantillon (40) sélectivement dans un mode ajustement de pression (700 ; 1400) dans lequel le dispositif de mesure (100) est actionné pour ajuster une pression dans un trajet fluidique de l'injecteur d'échantillon (40) tandis que le dispositif de mesure (100) est commuté hors du trajet fluidique entre l'entraînement de phase mobile (20) et l'unité de séparation (30).

5. Injecteur d'échantillon (40) selon la revendication 4, dans lequel le mode ajustement de pression (700 ; 1400) est un mode de compression dans lequel le dispositif de mesure (100) est actionné pour augmenter la pression dans le trajet fluidique de l'injecteur d'échantillon (40) pour au moins réduire une chute de pression lors d'une commutation ultérieure en mode séparation (500 ; 1200).

6. Injecteur d'échantillon (40) selon les revendications 3 et 4, dans lequel le mode ajustement de pression (700 ; 1400) est un mode de décompression dans lequel le dispositif de mesure (100) est actionné pour diminuer la pression dans le trajet fluidique de l'injecteur d'échantillon (40) pour au moins réduire une chute de pression lors d'une commutation ultérieure en mode admission (800 ; 1500).

7. Injecteur d'échantillon (40) selon l'une quelconque des revendications 1 à 6, quand le dispositif de mesure (100) comprend un piston déplaçable (102) configuré pour être déplacé vers l'arrière pour faire entrer une phase mobile et/ou un fluide d'échantillon ou pour décomprimer un trajet fluidique de l'injecteur d'échantillon (40).

8. Injecteur d'échantillon (40) selon l'une quelconque des revendications 1 à 7, dans lequel les deux interfaces fluidiques opposées (#3, #7) du dispositif de mesure (100) sont découplées fluidiquement de l'environnement fluidique dans le mode séparation (500 ; 1200) .

9. Injecteur d'échantillon (40) selon l'une quelconque des revendications 1 à 8, dans lequel le dispositif de mesure (100) est connecté directement entre deux orifices (402, #3, #7) de la vanne fluidique (90) de sorte que le dispositif de mesure (100) peut être déconnecté du reste de l'injecteur d'échantillon (40) par découplage fluidique de ces deux orifices (402, #3, #7) de tous les autres orifices (402) de la vanne fluidique (90).

10. Injecteur d'échantillon (40) selon l'une quelconque des revendications 1 à 9, dans lequel la vanne fluidique (90) comprend un stator (400) ayant une pluralité d'orifices (402) et comprend un rotor (300) ayant une pluralité de rainures (302), dans lequel certains des orifices (402) peuvent être amenés en communication fluidique les uns avec les autres via l'une des rainures (302) en faisant tourner le rotor (300) par rapport au stator (400).

11. Injecteur d'échantillon (40) selon la revendication 10, dans lequel les rainures (302) comprennent une pluralité de rainures (302) arquées agencées de manière circonférentielle et au moins une rainure (302) s'étendant radialement vers l'intérieur par rapport aux rainures (302) arquées agencées de manière circonférentielle.

12. Injecteur d'échantillon (40) selon la revendication 1, comprenant en outre un siège d'aiguille (108) configuré pour loger de manière étanche l'aiguille d'injection (104), dans lequel l'aiguille d'injection (104) peut être entraînée dans un récipient d'échantillon (110) pour être immergée dans le fluide d'échantillon et peut ensuite être entraînée dans le siège d'aiguille (108).

13. Système de séparation de fluide (10) pour séparer des composés d'un fluide d'échantillon dans une phase mobile, le système de séparation de fluide (10) comprenant :
un entraînement de phase mobile (20), en particulier un système de pompage, configuré pour entraîner la phase mobile à travers le système de séparation de fluide (10) ;
un injecteur d'échantillon (40) selon l'une quelconque des revendications 1 à 12 configuré pour introduire le fluide d'échantillon dans la phase mobile ; et
une unité de séparation (30), en particulier une colonne chromatographique, configurée pour séparer les composés du fluide d'échantillon dans la phase mobile.

14. Procédé de fonctionnement d'un système de séparation de fluide (10) selon la revendication 13 pour séparer des composés d'un fluide d'échantillon dans une phase mobile en exécutant une séquence de modes de fonctionnement en commutant une vanne fluidique (90) de l'injecteur d'échantillon (40) selon l'une quelconque des revendications 1 à 12, le procédé comprenant la commutation de la vanne fluidique (90) dans :
un mode rinçage (600 ; 1300, 1500) dans lequel un dispositif de mesure (100) de l'injecteur d'échantillon (40) est commuté au moins temporairement en communication fluidique avec un entraînement de phase mobile (20) entraînant la phase mobile pour que le dispositif de mesure (100) soit rincé par la phase mobile délivrée par l'entraînement de phase mobile (20) ;
un mode admission (800 ; 1500) dans lequel le dispositif de mesure (100) fait entrer une quantité mesurée du fluide d'échantillon dans l'injecteur d'échantillon (40) ; et
un mode séparation (500 ; 1200) dans lequel le dispositif de mesure (100) est commuté hors d'un trajet fluidique entre l'entraînement de phase mobile (20) et une unité de séparation (30), et le fluide d'échantillon est injecté dans le trajet fluidique entre l'entraînement de phase mobile (20) et l'unité de séparation (30) pour séparer les composés du fluide d'échantillon dans la phase mobile.
